# EUROPEAN PATENT SPECIFICATION

(11) **EP 2 936 888 B1**
(45) Date of publication and mention of the grant of the patent: **25.03.2020**
(21) Application number: 13864917.3
(22) Date of filing: 24.06.2013
(51) Int. Cl.: H04W 52/04, H04W 24/00, H04Q 9/00

(54) **CLOUD-AWARE COLLABORATIVE MOBILE PLATFORM POWER MANAGEMENT USING MOBILE SENSORS**
KOLLABORATIVE CLOUD-BEWUSSTE LEISTUNGSVERWALTUNG EINER MOBILEN PLATTFORM UNTER VERWENDUNG VON BEWEGLICHEN SENSOREN
GESTION DE PUISSANCE DE PLATEFORME MOBILE COLLABORATIVE COMPATIBLE AVEC LE NUAGE AU MOYEN DE CAPTEURS MOBILES

(30) Priority: 21.12.2012 US 201213724507
(43) Date of publication of application: 28.10.2015
(73) Proprietor: Intel Corporation, Santa Clara, CA 95054 (US)
(72) Inventor: MIN, Alexander W., Portland, Oregon 97229 (US); WANG, Ren, Portland, Oregon 97229 (US); TSAI, Jr-Shian, Portland, Oregon 97229 (US); TAI, Tsung-Yuan C., Portland, Oregon 97229 (US)
(74) Representative: HGF Limited
(86) International application number: PCT/US2013/047228
(87) International publication number: WO 2014/098994

(56) References cited:
- WO-A1-2012/037637
- US-A1- 2012 033 654
- US-A1- 2012 124 136
- US-B2- 8 284 100

## Description

### BACKGROUND

### Technical Field

Embodiments generally relate to the collaborative operational management of mobile platforms. More particularly, embodiments relate to using sensor-based information from a plurality of mobile devices to collaboratively manage the power and performance settings of individual mobile devices.

Such a system is for example described in publication WO2012/037637.

### Discussion

Modern mobile devices may conduct performance and power management activities based on conditions detected locally at the mobile device. For example, when a user of a mobile device visits a new location, the mobile device may independently scan/probe wireless channels and/or interfaces in order to determine the availability of an Internet connection. Such an approach may yield sub-optimal power efficiency and can result in reduced battery life.

### BRIEF DESCRIPTION OF THE DRAWINGS

The various advantages of the embodiments of the present invention will become apparent to one skilled in the art by reading the following specification and appended claims, and by referencing the following drawings, in which:
FIG. 1 is a block diagram of an example of a collaborative operational management architecture according to an embodiment;
FIG. 2 is a flowchart of an example of a method of operating a server according to an embodiment;
FIG. 3 is a flowchart of an example of a method of managing wireless connections on a mobile device according to an embodiment; and
FIG. 4 is a graphical illustration of an example of a set of wireless connection context information according to an embodiment.

### DETAILED DESCRIPTION

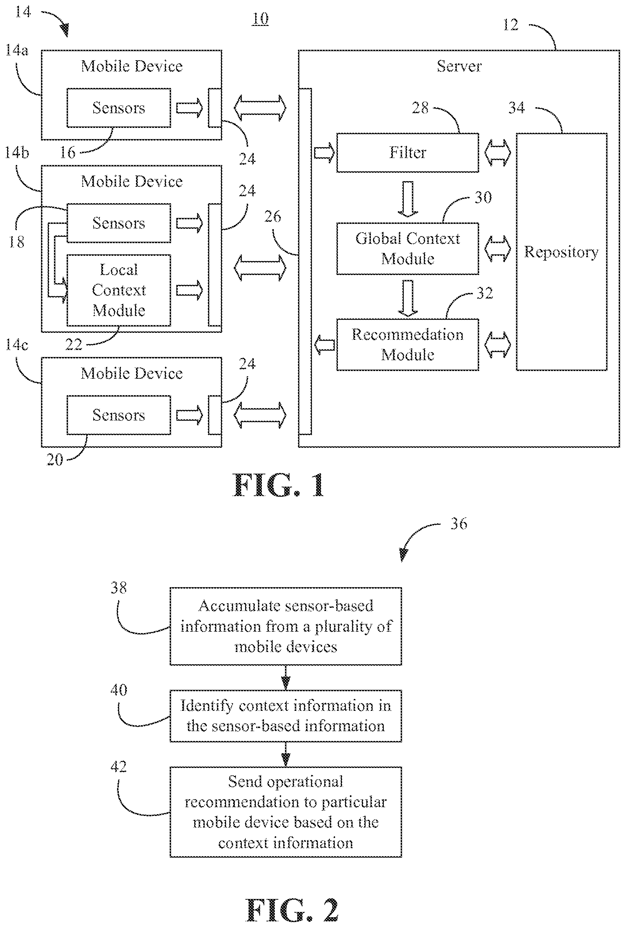

FIG. 1 shows an architecture 10 in which a server 12 accumulates sensor-based information from a plurality of mobile devices 14 (14a-14c), identifies global context information in the sensor-based information, and sends operational recommendations to particular (e.g., individual and/or specific) mobile devices 14 based on the context information. The mobile devices 14 (e.g., clients) may include, but are not limited to, notebook computers, smart tablets, personal digital assistants (PDAs), mobile Internet devices (MIDs), wireless smart phones, image capture devices, media players, etc., wherein the illustrated mobile devices 14 may be operated and/or owned by different users who may or may not be affiliated with one another.

In the illustrated example, the mobile devices 14 include one or more sensors from which the sensor-based information originates. For example, a first mobile device 14a may include sensors 16, a second mobile device 14b may include sensors 18, and a third mobile device 14c may include sensors 20. The sensors 16, 18, 20 might include, for example, accelerometers, gyroscopes, proximity sensors, ambient light sensors, digital compasses, global positioning system (GPS) sensors, battery life sensors (e.g., current, voltage and/or charge level sensors), wireless network controllers, and so forth, wherein the individual mobile devices 14 may have different sensor configurations as well as different communication capabilities from one another. Thus, the first mobile device 14a may send a different type of sensor-based information than the second mobile device 14b and/or the third mobile device 14c, the second mobile device 14b may send a different type of sensor-based information than the first mobile device 14a and/or the third mobile device 14c, and so forth.

The sensor-based information may include raw sensor data such as, for example, received signal strength (RSS) data, accelerometer data, wireless access point (AP) identifier data, battery life data, and so forth. The sensor-based information may also include device-generated local context information from, for example, a local context module 22 of the second mobile device 14b. For example, the local context module 22 may be configured to determine whether the second mobile device 14b is relatively stationary and report that information to the server 12 as local context information. The local context information may also include other information such as the geographic location (e.g., place of business, street address, etc.) of the mobile device 14b, user requests/settings, and so forth.

In the illustrated example, the mobile devices 14 send the sensor-based information to the server 12 via network interfaces 24 (e.g., network controller, communications physical layer/PHY, antenna structure, etc.) and an appropriate network infrastructure (not shown). The network infrastructure may incorporate technology such as, for example, cellular telephone (e.g., Wideband Code Division Multiple Access/W-CDMA (Universal Mobile Telecommunications System/UMTS), CDMA2000 (IS-856/IS-2000), etc.), WiFi (Wireless Fidelity, e.g., Institute of Electrical and Electronics Engineers/IEEE 802.11-2007, Wireless Local Area Network/LAN Medium Access Control (MAC) and PHY Specifications), 4G LTE (Fourth Generation Long Term Evolution), Bluetooth (e.g., IEEE 802.15.1-2005, Wireless Personal Area Networks), WiMax (e.g., IEEE 802.16-2004, LAN/MAN Broadband Wireless LANS), GPS, spread spectrum (e.g., 900 MHz), near field communications (NFC), and/or other radio frequency (RF) telephony technology.

The illustrated server 12 includes a network interface 26 (e.g., network controller, communications PHY, antenna structure) configured to accumulate the sensor-based information from the mobile devices 14 and a global context module 30 to identify global and/or local context information in the sensor-based information, wherein the context information may be relevant to one or more of the mobile devices 14. For example, sensor-based information such as a wireless AP identifier obtained from a WiFi sensor of the third mobile device 14c might be associated with a location that is near (e.g., geographically relevant to) a street address obtained from the local context module 22 of the second mobile device 14b, wherein the wireless AP identifier, the street address and/or the geographic relationship between the two may be considered context information. Other types of context information may also be determined based on, for example, wireless connectivity, battery life, etc.

The server 12 may also include a recommendation module 32 to send operational recommendations to particular mobile devices 14 based on the context information identified by the global context module 30. Thus, in the example of the second mobile device 14b and the third mobile device 14c providing geographically relevant information, the recommendation module 32 might recommend that the second mobile device 14b attempt to access the wireless AP identified by the third mobile device 14c. Of particular note is that such a recommendation may be especially useful if the second mobile device 14b has reported that its WiFi throughput and/or RSS is relatively low and the third mobile device has reported that its WiFi throughput and/or RSS is relatively high, wherein greater throughput may result in better performance as well as enhanced power efficiency.

Indeed, the second mobile device 14b may be using a different network controller altogether (e.g., third generation/3G controller) that might provide sub-optimal performance and/or power efficiency compared to the WiFi wireless AP link identified by the third mobile device 14c. Thus, the illustrated example obviates any need for the mobile devices 14 to continuously scan/probe each wireless controller, interface and/or AP to determine the wireless configuration that provides the best performance. Other types of operational recommendations such as, for example, other power management actions (e.g., suggestion to visit nearby charging stations), performance management actions, (e.g., suggestion to activate/deactivate various radios and/or software applications) wireless interface selections, and so forth, may also be generated by the recommendation module 32. One or more the mobile devices 14 may also have local recommendation modules to generate operational recommendations from raw sensor data and/or context information.

The illustrated server 12 also includes a filter module 28 to filter out (e.g., remove) a portion of the sensor-based information (e.g., to obtain a reduced set of sensor-based information) and a cloud repository 34 to store the reduced set of sensor based-information for future use, indexing and/or searching. The removed portion of the sensor-based information may be determined to be redundant, obsolete and/or otherwise unnecessary, wherein the filtering determination may be made based on various requirements from other components of the server 12 such as, for example, the global context module 30 (e.g., processing overhead limitations), recommendation module 32 (e.g., processing overhead limitations) and/or repository 34 (e.g., storage limitations).

In one example, the architecture 10 includes logic that at least partially includes hardware logic. In such a case, the hardware logic may be implemented in the server 12 as, for example, the network interface 26, the global context module 30, the recommendation module 32 and/or the filter module 28. Additionally, the hardware logic may be implemented in one or more of the mobile devices 14 as, for example, the network interfaces 24, the local context module 22 and/or sensor interfaces.

Turning now to FIG. 2, a method 36 of operating a server such as, for example, the server 12 (FIG. 1), is shown. The method 36 may be implemented as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof. For example, computer program code to carry out operations shown in the method 36 may be written in any combination of one or more programming languages, including an object oriented programming language such as Java, Smalltalk, C++ or the like and conventional procedural programming languages, such as the "C" programming language or similar programming languages.

Illustrated processing block 38 provides for accumulating sensor-based information from a plurality of mobile devices, wherein the sensor-based information may include raw sensor data, device-generated context information, and so forth. In one example, the raw sensor data includes, for example, RSS data, accelerometer, wireless AP identifier data, battery life data, and so forth. Block 38 may also involve filtering out a portion of the sensor-based information to obtain a reduced set of sensor-based information and/or storing the reduced set of sensor-based information to a cloud repository. Context information may be identified in the sensor-based information at block 40, wherein the context information can be identified based on location, wireless connectivity, battery life, etc. In one example, the context information is identified in the reduced set of sensor-based information resulting from one or more filtering operations, as already noted.

Illustrated block 42 provides for sending an operational recommendation to one or more particular mobile devices based on the context information. The operational recommendation may identify, for example, a power management action, a performance management action, a wireless interface selection, a wireless AP selection, and so forth, wherein the receiving mobile device may determine whether to implement the recommendation. The operational recommendation may be pushed to the mobile device (e.g., initiated by the server) or pulled by the remote device (e.g., initiated by the mobile device). The determination as to whether to implement the recommendation may involve prompting a user of the mobile device for authorization, consulting one or more user preferences, automatically implementing the recommendation, or any combination thereof.

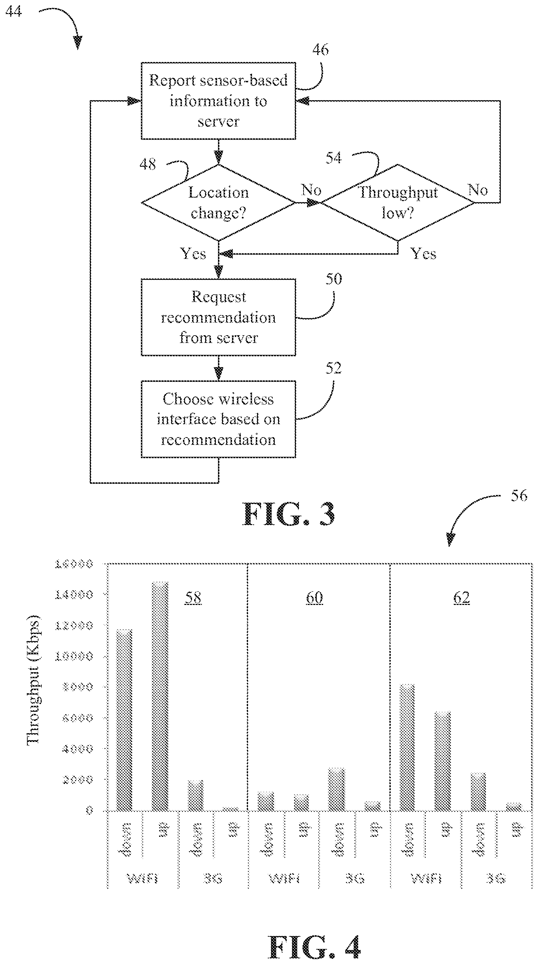

FIG. 3 shows a method 44 of managing wireless connections on a mobile device such as, for example, one or more of the mobile devices 14 (FIG. 1), already discussed. The method 44 may be implemented as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof. Illustrated processing block 46 provides for reporting and/or sending sensor-based information to a server, wherein a determination may be made at block 48 as to whether a location change has taken place at the mobile device. The determination at block 48 may take into consideration, for example, RSS data, wireless AP identifier data, accelerometer data, compass data, and so forth.

If a location change is detected, block 50 may request a wireless interface recommendation from the server, wherein a wireless interface may be chosen at block 52 based on the recommendation. If, on the other hand, no location change is detected at block 48, illustrated block 54 determines whether throughput (e.g., uplink/transmitting and/or downlink/receiving) is below a threshold value. If so, block 50 may request a wireless interface recommendation from the server, wherein a wireless interface may be chosen at block 52 based on the recommendation. Thus, the illustrated approach enhances performance by leveraging sensor-based information from the cloud whenever movement conditions or throughput conditions indicate that such information may be useful.

FIG. 4 shows a graphical illustration 56 of a set of wireless connection context information. In the illustrated example, a first region 58 of the illustration 56 shows uplink and downlink throughput for a WiFi interface as well as a 3G interface in a first geographic location. Similarly, a second region 60 shows uplink and downlink throughput for WiFi and 3G interfaces in a second geographic location. Thus, the first region 58 and the second region 60 may be populated from sensor-based information accumulated from mobile devices when the mobile devices are present in those locations. Additionally, a third region 62 of the illustration 56 shows uplink and downlink throughput for WiFi and 3G interfaces for a particular mobile device, wherein a wireless interface recommendation may be made to the mobile device corresponding to the third region 62 based on the sensor-based information reflected in the first region 58 and the second region 60.

For example, the server might recommend that the mobile device either switch from the 3G interface to the WiFi interface (because the WiFi interface currently has more throughput) and/or move to the first geographic location and use the WiFi interface to achieve even greater throughput. Therefore, context information from not only local sensor data, but also sensor data from other mobile devices can be very useful in obtaining optimal wireless performance and power efficiency for a given location and time.

Thus, techniques described herein may leverage sensor information available in mobile platforms/devices for power management as well as performance management. Mobile applications and services may generate and consume high volumes of sensor information on a regular basis, and techniques described herein can reuse that information to optimize power management policies rather than immediately discarding it. Moreover, techniques may take advantage of the relatively high computing capability of cloud computing architectures by opportunistically sending sensor data to the cloud for processing (e.g., aggregation, filtering, fusion, decision making, etc.). Such an approach may eliminate high energy overhead associated with the processing.

Additionally, a recommendation module can formulate optimal power management policies that are tailored to specific devices, locations, times, and so forth. Indeed, many different algorithms such as, for example, collaborative/context-based filters and/or case-based reasoning, may enable users to select the optimal operational settings. The techniques may be considered collaborative in the sense that the recommendation module may use not only the local sensor-based information of a particular mobile device, but may suggest operational management policies based on statistical results obtained from analyzing large-scale sensor/context data from other mobile devices.

Embodiments may therefore include a system having a network interface to accumulate sensor-based information from a plurality of mobile devices, and a context module to identify context information in the sensor-based information. The context information may be relevant to a particular mobile device in the plurality of mobile devices, wherein a recommendation module can send an operational recommendation to the particular mobile device based at least in part on the context information.

Embodiments may also include a non-transitory computer readable storage medium comprising a set of instructions which, if executed by a processor, cause a computer to accumulate sensor-based information from a plurality of mobile devices. In addition, the instructions, if executed, may also cause a computer to identify context information in the sensor-based information, wherein the context information is to be relevant to a particular mobile device in the plurality of mobile devices. The instructions, if executed, may also cause a computer to send an operational recommendation to the particular mobile device based on the context information.

Embodiments may also include a mobile device having one or more local sensors and a sensor interface to obtain sensor-based information from the one or more local sensors. Additionally, the mobile device may include a network interface to send the sensor-based information to a server and receive an operational recommendation from the server, wherein the operational recommendation is to include first context information associated with sensor-based information from one or more additional mobile devices.

Embodiments may also include a non-transitory computer readable storage medium comprising a set of instructions which, if executed by a mobile device, cause the mobile device to obtain sensor-based information from one or more local sensors of the mobile device. In addition, the instructions, if executed, may also cause the mobile device to send the sensor-based information to a server, and receive an operational recommendation from the server, wherein the operational recommendation is to include context information associated with sensor-based information from one or more additional mobile devices.

Embodiments of the present invention are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments of the present invention are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments of the invention. Further, arrangements may be shown in block diagram form in order to avoid obscuring embodiments of the invention, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments of the invention, it should be apparent to one skilled in the art that embodiments of the invention can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. are used herein only to facilitate discussion, and carry no particular temporal or chronological significance unless otherwise indicated.

## Claims

1. A system (12) to conduct collaborative operational management, comprising:
a network interface (26) to accumulate sensor-based information originating from one or more sensors of a plurality of mobile devices (14), wherein the sensor-based information includes raw sensor data including at least battery life data of the plurality of mobile devices;
a context module (30) to identify context information in the sensor-based information, wherein the context information is to be relevant to a particular mobile device in the plurality of mobile devices (14) and the context information is identified based at least on the battery life and a location of the particular mobile device; and
a recommendation module (32) to send an operational recommendation to the particular mobile device based on the context information, wherein the operational recommendation is to include first context information associated with sensor-based information from one or more additional mobile devices of the plurality of mobile devices (14).

2. The system (12) of claim 1, wherein the operational recommendation is to identify one or more of a power management action, a performance management action, a wireless interface selection and a wireless access point selection.

3. The system (12) of claim 1, wherein the context information is to further be identified based on a wireless connectivity of the particular mobile device.

4. The system of claim 1, wherein the raw sensor data is to further include one or more of received signal strength, RSS, data, accelerometer data and wireless access point identifier data.

5. The system (12) of claim 1, wherein the sensor-based information is to include device-generated context information.

6. The system (12) of any one of claims 1 to 5, further including a filter module (28) to filter out a portion of the sensor-based information to obtain a reduced set of sensor-based information, wherein the context information is to be identified in the reduced set of sensor-based information.

7. The system (12) of claim 6, further including a cloud repository (34), wherein the filter module is to store the reduced set of sensor-based information to the cloud repository (34).

8. An apparatus (12) to conduct collaborative operational management, comprising means to:
accumulate sensor-based information originating from one or more sensors of a plurality of mobile devices (14), wherein the sensor-based information includes raw sensor data including at least battery life data of the plurality of mobile devices;
identify context information in the sensor-based information, wherein the context information is to be relevant to a particular mobile device in the plurality of mobile devices and the context information is identified based at least on the battery life and a location of the particular mobile device; and
send an operational recommendation to the particular mobile device based on the context information, wherein the operational recommendation is to include first context information associated with sensor-based information from one or more additional mobile devices of the plurality of mobile devices (14).

9. A local mobile device (14b) to conduct collaborative operational management, comprising:
one or more local sensors (18);
a sensor interface to obtain sensor-based information originating from the one or more local sensors (18), wherein the sensor-based information includes raw sensor data including at least battery life data of the mobile device; and
a network interface (24) to send the sensor-based information to a server (12) and receive an operational recommendation from the server (12), wherein the operational recommendation is to include first context information associated with sensor-based information from one or more additional mobile devices (14a, 14c).

10. The local mobile device (14b) of claim 9, wherein the operational recommendation is to identify one or more of a power management action, a performance management action, a wireless interface selection and a wireless access point selection.

11. The local mobile device (14b) of claim 9, wherein the raw sensor data is to further include one or more of received signal strength, RSS, data, accelerometer data and wireless access point identifier data.

12. The local mobile device (14b) of claim 9, further including a context module (22) to identify second context information associated with raw sensor data from the one or more local sensors (18), wherein the second context information is to be sent to the server (12).

13. A local mobile device (14b) to conduct collaborative operational management, comprising:
means for obtaining sensor-based information originating from one or more local sensors (18) of the local mobile device (14b), wherein the sensor-based information includes raw sensor data including at least battery life data of the mobile device;
means (24) for sending the sensor-based information to a server (12);
means (24) for receiving an operational recommendation from the server (12), wherein the operational recommendation is to include context information associated with sensor-based information from one or more additional mobile devices (14a, 14c).

## Patentansprüche

1. System (12) zum Durchführen von kollaborativem operativem Management, umfassend:
eine Netzwerkschnittstelle (26) zum Akkumulieren von Informationen auf Sensorbasis, die von einem oder mehreren Sensoren mehrerer mobiler Vorrichtungen (14) stammen, wobei die Informationen auf Sensorbasis unverarbeitete Sensordaten umfassen, die mindestens Batterielebensdauerdaten der mehreren mobilen Vorrichtungen umfassen;
ein Kontextmodul (30) zum Identifizieren von Kontextinformationen in den Informationen auf Sensorbasis, wobei die Kontextinformationen für eine bestimmte mobile Vorrichtung der mehreren mobilen Vorrichtungen (14) relevant sein sollen und die Kontextinformationen mindestens auf der Basis der Batterielebensdauer und eines Orts der bestimmten mobilen Vorrichtung identifiziert werden; und
ein Empfehlungsmodul (32) zum Senden einer operativen Empfehlung zu der bestimmten mobilen Vorrichtung auf der Basis der Kontextinformationen, wobei die operative Empfehlung erste Kontextinformationen, die Informationen auf Sensorbasis von einer oder mehreren zusätzlichen mobilen Vorrichtungen der mehreren mobilen Vorrichtungen (14) zugeordnet sind, umfassen soll.

2. System (12) nach Anspruch 1, wobei die operative Empfehlung eine oder mehrere einer Power-Management-Aktion, einer Performance-Management-Aktion, einer Auswahl einer drahtlosen Schnittstelle und einer Auswahl eines drahtlosen Zugangspunkts identifizieren soll.

3. System (12) nach Anspruch 1, wobei die Kontextinformationen ferner auf der Basis einer drahtlosen Konnektivität der bestimmten mobilen Vorrichtung identifiziert werden sollen.

4. System nach Anspruch 1, wobei die unverarbeiteten Sensordaten ferner eines oder mehrere von Empfangssignalstärke- bzw. RSS-Daten, Beschleunigungsmesserdaten und Kennungsdaten drahtloser Zugangspunkte umfassen sollen.

5. System (12) nach Anspruch 1, wobei die Informationen auf Sensorbasis vorrichtungserzeugte Kontextinformationen umfassen sollen.

6. System (12) nach einem der Ansprüche 1 bis 5, das ferner ein Filtermodul (28) zum Herausfiltern eines Teils der Informationen auf Sensorbasis zum Erhalten einer reduzierten Menge von Informationen auf Sensorbasis umfasst, wobei die Kontextinformationen in der reduzierten Menge von Informationen auf Sensorbasis identifiziert werden sollen.

7. System (12) nach Anspruch 6, das ferner ein Cloud-Repositorium (34) umfasst, wobei das Filtermodul die reduzierte Menge von Informationen auf Sensorbasis in dem Cloud-Repositorium (34) speichern soll.

8. Vorrichtung (12) zum Durchführen von kollaborativem operativem Management, die Mittel für Folgendes umfasst:
Akkumulieren von Informationen auf Sensorbasis, die von einem oder mehreren Sensoren mehrerer mobiler Vorrichtungen (14) stammen, wobei die Informationen auf Sensorbasis unverarbeitete Sensordaten umfassen, die mindestens Batterielebensdauerdaten der mehreren mobilen Vorrichtungen umfassen;
Identifizieren von Kontextinformationen in den Informationen auf Sensorbasis, wobei die Kontextinformationen für eine bestimmte mobile Vorrichtung der mehreren mobilen Vorrichtungen relevant sein sollen und die Kontextinformationen mindestens auf der Basis der Batterielebensdauer und eines Orts der bestimmten mobilen Vorrichtung identifiziert werden; und
Senden einer operativen Empfehlung zu der bestimmten mobilen Vorrichtung auf der Basis der Kontextinformationen, wobei die operative Empfehlung erste Kontextinformationen, die Informationen auf Sensorbasis von einer oder mehreren zusätzlichen mobilen Vorrichtungen der mehreren mobilen Vorrichtungen (14) zugeordnet sind, umfassen soll.

9. Lokale mobile Vorrichtung (14b) zum Durchführen von kollaborativem operativem Management, umfassend:
einen oder mehrere lokale Sensoren (18);
eine Sensorschnittstelle zum Erhalten von Informationen auf Sensorbasis, die von dem einen oder den mehreren lokalen Sensoren (18) stammen, wobei die Informationen auf Sensorbasis unverarbeitete Sensordaten umfassen, die mindestens Batterielebensdauerdaten der mobilen Vorrichtung umfassen; und
eine Netzwerkschnittstelle (24) zum Senden der Informationen auf Sensorbasis zu einem Server (12) und Empfangen einer operativen Empfehlung von dem Server (12), wobei die operative Empfehlung erste Kontextinformationen umfassen soll, die Informationen auf Sensorbasis von einem oder mehreren zusätzlichen mobilen Vorrichtungen (14a, 14c) zugeordnet sind.

10. Lokale mobile Vorrichtung (14b) nach Anspruch 9, wobei die operative Empfehlung eine oder mehrere einer Power-Management-Aktion, einer Performance-Management-Aktion, einer Auswahl einer drahtlosen Schnittstelle und einer Auswahl eines drahtlosen Zugangspunkts identifizieren soll.

11. Lokale mobile Vorrichtung (14b) nach Anspruch 9, wobei die unverarbeiteten Sensordaten ferner eines oder mehrere von Empfangssignalstärke- bzw. RSS-Daten, Beschleunigungsmesserdaten und Kennungsdaten drahtloser Zugangspunkte umfassen sollen.

12. Lokale mobile Vorrichtung (14b) nach Anspruch 9, die ferner ein Kontextmodul (22) zum Identifizieren von zweiten Kontextinformationen umfasst, die unverarbeiteten Sensordaten von dem einen oder den mehreren lokalen Sensoren (18) zugeordnet sind, wobei die zweiten Kontextinformationen zu dem Server (12) gesendet werden sollen.

13. Lokale mobile Vorrichtung (14b) zum Durchführen von kollaborativem operativem Management, umfassend:
Mittel zum Erhalten von Informationen auf Sensorbasis, die von dem einen oder den mehreren lokalen Sensoren (18) der lokalen mobilen Vorrichtung (146) stammen, wobei die Informationen auf Sensorbasis unverarbeitete Sensordaten umfassen, die mindestens Batterielebensdauerdaten der mobilen Vorrichtung umfassen;
Mittel (24) zum Senden der Informationen auf Sensorbasis zu einem Server (12);
Mittel (24) zum Empfangen einer operativen Empfehlung von dem Server (12), wobei die operative Empfehlung Kontextinformationen umfassen soll, die Informationen auf Sensorbasis von einer oder mehreren zusätzlichen mobilen Vorrichtungen (14a, 14c) zugeordnet sind.

## Revendications

1. Système (12) pour mener une gestion opérationnelle collaborative, comprenant :
une interface réseau (26) pour accumuler des informations à base de capteurs provenant d'un ou de plusieurs capteurs d'une pluralité de dispositifs mobiles (14), dans lequel les informations à base de capteurs comportent des données brutes de capteur comprenant au moins des données de durée de vie de batterie de la pluralité de dispositifs mobiles ;
un module de contexte (30) pour identifier des informations de contexte dans les informations à base de capteurs, dans lequel les informations de contexte doivent se référer à un dispositif mobile particulier dans la pluralité de dispositifs mobiles (14) et les informations de contexte sont identifiées en se basant au moins sur la durée de vie de la batterie et une localisation du dispositif mobile particulier ; et
un module de recommandation (32) pour envoyer une recommandation opérationnelle au dispositif mobile particulier sur la base des informations de contexte, dans lequel la recommandation opérationnelle doit comporter des premières informations de contexte associées à des informations à base de capteurs en provenance d'un ou de plusieurs dispositifs mobiles supplémentaires de la pluralité de dispositifs mobiles (14) .

2. Système (12) selon la revendication 1, dans lequel la recommandation opérationnelle doit identifier une action de gestion de puissance et/ou une action de gestion de performance et/ou une sélection d'interface sans fil et/ou une sélection de point d'accès sans fil.

3. Système (12) selon la revendication 1, dans lequel les informations de contexte doivent en outre être identifiées en se basant sur une connectivité sans fil du dispositif mobile particulier.

4. Système selon la revendication 1, dans lequel les données brutes de capteur doivent en outre comporter des données d'intensité du signal reçu, RSS, et/ou des données d'accéléromètre et/ou des données d'identifiant de point d'accès sans fil.

5. Système (12) selon la revendication 1, dans lequel les informations à base de capteurs doivent comporter des informations de contexte générées par un dispositif.

6. Système (12) selon l'une quelconque des revendications 1 à 5, comprenant en outre un module de filtrage (28) pour filtrer une partie des informations à base de capteurs pour obtenir un ensemble réduit d'informations à base de capteurs, dans lequel les informations de contexte doivent être identifiées dans l'ensemble réduit d'informations à base de capteurs.

7. Système (12) selon la revendication 6, comprenant en outre un référentiel en nuage (34), dans lequel le module de filtrage est destiné à stocker l'ensemble réduit d'informations à base de capteurs dans le référentiel en nuage (34).

8. Appareil (12) pour mener une gestion opérationnelle collaborative, comprenant des moyens :
pour accumuler des informations à base de capteurs provenant d'un ou de plusieurs capteurs d'une pluralité de dispositifs mobiles (14), dans lequel les informations à base de capteurs comportent des données brutes de capteur comprenant au moins des données de durée de vie de batterie de la pluralité de dispositifs mobiles ;
pour identifier des informations de contexte dans les informations à base de capteurs, dans lequel les informations de contexte doivent se référer à un dispositif mobile particulier dans la pluralité de dispositifs mobiles et les informations de contexte sont identifiées en se basant au moins sur la durée de vie de la batterie et une localisation du dispositif mobile particulier ; et
pour envoyer une recommandation opérationnelle au dispositif mobile particulier sur la base des informations de contexte, dans lequel la recommandation opérationnelle doit comporter des premières informations de contexte associées à des informations à base de capteurs en provenance d'un ou de plusieurs dispositifs mobiles supplémentaires de la pluralité de dispositifs mobiles (14).

9. Dispositif mobile local (14b) pour mener une gestion opérationnelle collaborative, comprenant :
un ou plusieurs capteurs locaux (18) ;
une interface de capteur pour obtenir des informations à base de capteurs provenant du ou des plusieurs capteurs locaux (18), dans lequel les informations à base de capteurs comportent des données brutes de capteur comprenant au moins des données de durée de vie de batterie du dispositif mobile ;
une interface réseau (24) pour envoyer les informations à base de capteurs à un serveur (12) et pour recevoir une recommandation opérationnelle en provenance du serveur (12), dans lequel la recommandation opérationnelle doit comporter des premières informations de contexte associées à des informations à base de capteurs en provenance d'un ou de plusieurs dispositifs mobiles supplémentaires (14a, 14c).

10. Dispositif mobile local (14b) selon la revendication 9, dans lequel la recommandation opérationnelle doit identifier une action de gestion de puissance et/ou une action de gestion de performance et/ou une sélection d'interface sans fil et/ou une sélection de point d'accès sans fil.

11. Dispositif mobile local (14b) selon la revendication 9, dans lequel les données brutes de capteur doivent en outre comporter des données d'intensité du signal reçu, RSS, et/ou des données d'accéléromètre et/ou des données d'identifiant de point d'accès sans fil.

12. Dispositif mobile local (14b) selon la revendication 9, comprenant en outre un module de contexte (22) pour identifier des secondes informations de contexte associées à des données brutes de capteur en provenance du ou des capteurs locaux (18), dans lequel les secondes informations de contexte doivent être envoyées au serveur (12) .

13. Dispositif mobile local (14b) pour mener une gestion opérationnelle collaborative, comprenant :
des moyens pour obtenir des informations à base de capteurs provenant d'un ou de plusieurs capteurs locaux (18) du dispositif mobile local (14b), dans lequel les informations à base de capteurs comportent des données brutes de capteur comprenant au moins des données de durée de vie de batterie du dispositif mobile ;
des moyens (24) pour envoyer les informations à base de capteurs à un serveur (12) ;
des moyens (24) pour recevoir une recommandation opérationnelle en provenance du serveur (12), dans lequel la recommandation opérationnelle doit comporter des informations de contexte associées à des informations à base de capteurs en provenance d'un ou de plusieurs dispositifs mobiles supplémentaires (14a, 14c).
